# EUROPEAN PATENT SPECIFICATION

(11) **EP 4 324 124 B1**
(45) Date of publication and mention of the grant of the patent: **15.01.2025**
(21) Application number: 21716586.9
(22) Date of filing: 12.04.2021
(51) Int. Cl.: H04J 3/14, G06N 20/20, G06N 5/00

(54) **DEVICE AND METHOD FOR SYNCHRONIZATION AMONG NODES**
VORRICHTUNG UND VERFAHREN ZUR SYNCHRONISATION ZWISCHEN KNOTEN
DISPOSITIF ET PROCÉDÉ DE SYNCHRONISATION ENTRE NOEUDS

(43) Date of publication of application: 21.02.2024
(73) Proprietor: Telefonaktiebolaget LM Ericsson (publ), 164 83 Stockholm (SE)
(72) Inventor: MORCHIO, Marcello, 16131 Genova Genova (IT); MAGRI, Roberto, 54038 Montignoso (MS) Massa Carrara (IT); FULIGNOLI, Annamaria, 56125 Pisa Pisa (IT); VALERI, Marina, 16156 Genova Genova (IT); ANDREOLI ARMANNI, Giorgio, 06062 Città della Pieve Perugia (IT); PALAGI, Alfredo, 16011 Arenzano Genova (IT)
(74) Representative: Ericsson
(86) International application number: PCT/EP2021/059436
(87) International publication number: WO 2022/218500

(56) References cited:
- US-A1- 2019 349 392
- US-A1- 2020 267 057
- US-B1- 10 931 692

## Description

### TECHNICAL FIELD

The invention relates to a method and a device for monitoring a synchronization status among a plurality of nodes operating in a communications network, corresponding computer program and computer program product.

### BACKGROUND

Wireless communication networks such as 4G, 5G, and future 6G networks, are dependent on network synchronization and often provide time-sensitive services that depend on the network being synchronized, i.e. time and frequency alignment between radio access network, RAN, nodes in the network.

Specific requirements for RAN timing and synchronization depend on parts of the radio spectrum used and deployed radio technology.

Examples of requirements according to the used spectrum comprise a relatively loose requirements for over the air frequency synchronization in case of Frequency Division Duplex, FDD, wherein FDD-based 5G and LTE networks can survive lengthy (>1 hour) loss of synchronization; on the other hand, to ensure no interference between uplink and downlink Time Division Duplex, TDD, a much tighter time and phase synchronization is required.

Examples of requirements dependent on the radio technology deployed comprise a relative time sync ≤1 µs among neighboring radio nodes in case of deployment of coordinated RAN features such as Coordinated Multipoint, CoMP and absolute time sync ~1.5 µs across the whole network in case of beamforming with NR-TDD. In general, a mix of absolute (across the whole network) and relative (among neighboring radio nodes) criteria requires a time sync of ~1.5 µs or less to support a network's optimal spectrum utilization and advanced RAN features.

There is also a need for increased reliability in the timing source. While today's FDD-based LTE network can continue to operate for hours after sync loss with no degradation, in the future, loss of timing may have an immediate impact on RAN performance. A solution of deploying at least one Global Positioning System, GPS, receiver at each site is not competitive in terms of cost. The growing trend is to use a transport network to synchronize the RAN. This, in turn, implies the need to deploy routers and fronthaul units that fully support timing and sync transport requirements via PTP protocols such as IEEE1588, while delivering the highest level of performance. A further problem is that RAN nodes may be implemented using different technologies and have different level of compliance to a standard, either because being manufactured by different companies or because designed by different branches of the same company. In such a scenario, timing errors may occur for clocks of the RAN nodes in the network towards a common reference time base, i.e. a global clock.

A synchronization misalignment between different RAN nodes is difficult to spot because the synchronization paths from a source Global Navigation Satellite System, GNSS, to RAN nodes can be perfectly functional with no active alarms along the synchronization chain, but the synchronization among RAN nodes can be disrupted due to the accumulation of delay asymmetries in some links. This kind of issues can be spotted at a radio interface with specific instruments or by means of new features implemented in a RAN node for statistically comparing phases of network synchronization at the Radio Interface. However, the absence of alarms along the synchronization chain may require intervention of domain experts for network troubleshooting to locate the synchronization failure. In case of alarms, the analysis of alarm and performance logs on the RAN nodes along the synchronization chain may allow identification of the most probable causes of the fault; this activity is generally carried out manually by domain experts and it is generally time consuming.

Document US2019/349392 discloses a time synchronization anomaly detection process executing one or more machine learning-based analyser to detect time synchronization anomalies along a path in a deterministic network.

### SUMMARY

An object of the invention is to enable detection and localisation of a synchronization problem and/or root cause analysis of synchronization issues among a plurality of nodes operating in a communications network.

To achieve said object, according to a first aspect of the present invention there is provided a method for monitoring a synchronization status among a plurality of nodes operating in a communications network. The method of this first aspect comprises obtaining information associated with a plurality of nodes, the nodes having synchronized clocks, wherein an information for a node is indicative of one or more parameter values. The method also comprises creating a first dataset based on the obtained information associated with the plurality of nodes, the first dataset comprising time-aligned samples of the one or more parameters for a time interval; creating a second dataset in form of a plurality of time-slices comprising the samples from the first dataset and statistics determined based on the samples from the first dataset calculated for the time interval. The method further comprises running a first Machine Learning, ML, model for anomaly detection on the first dataset, the first ML model generating first labels identifying anomalous nodes; and identifying anomalous nodes and time-slices when the anomalous nodes exhibit anomalous behavior using the first labels and the second dataset to determine relationships between the anomalous nodes and other nodes of the network.

According to a second aspect of the present invention there is provided a device for monitoring a synchronization status among a plurality of nodes operating in a communications network. The device comprising a processor and a memory, the memory having stored thereon instructions executable by the processor. The instructions, when executed by the processor, cause the device to obtain information associated with a plurality of nodes, the nodes having synchronized clocks, wherein an information for a node is indicative of one or more parameter values. The device is operative to create a first dataset based on the obtained information associated with the plurality of nodes, the first dataset comprising time-aligned samples of the one or more parameters for a time interval; create a second dataset in form of a plurality of time-slices comprising the samples from the first dataset and statistics determined based on the samples from the first dataset calculated for the time interval. The device is operative to run a first Machine Learning, ML, model for anomaly detection on the first dataset, the first ML model generating first labels identifying anomalous nodes; and identify anomalous nodes and time-slices when the anomalous nodes exhibit anomalous behavior using the first labels and the second dataset to determine relationships between the anomalous nodes and other nodes of the network.

According to a third aspect of the present invention there is provided a computer program comprising instructions which, when run in a processing unit on a device, cause the device to obtain information associated with a plurality of nodes, the nodes having synchronized clocks, wherein an information for a node is indicative of one or more parameter values; create a first dataset based on the obtained information associated with the plurality of nodes, the first dataset comprising time-aligned samples of the one or more parameters for a time interval; create a second dataset in form of a plurality of time-slices comprising the samples from the first dataset and statistics determined based on the samples from the first dataset calculated for the time interval; run a first Machine Learning, ML, model for anomaly detection on the first dataset, the first ML model generating first labels identifying anomalous nodes; identify anomalous nodes and time-slices when the anomalous nodes exhibit anomalous behavior using the first labels and the second dataset to determine relationships between the anomalous nodes and other nodes of the network.

According to a fourth aspect of the present invention there is provided a computer program product comprising a computer readable storage medium on which a computer program, as mentioned above, is stored.

In an embodiment the method may comprise running an explainer model on the first ML model and the first dataset, wherein an output of the explainer model is a plurality of feature importance vectors for the time interval; obtaining a plurality of second labels associated with the feature importance vectors for the time interval, wherein a second label indicates a type of anomaly; running a second ML model taking the plurality of the feature importance vectors as an input; and identifying the type of anomaly of the anomalous nodes.

In an embodiment the method may comprise running a third ML model on the first dataset and a plurality of associated first labels; running an explainer model on the third ML model and the first dataset, wherein an output of the explainer model is a plurality of feature importance vectors for the time interval; obtaining a plurality of second labels with the feature importance vectors for the time interval, wherein a second label indicates a type of anomaly; running a second ML model taking the plurality of the feature importance vectors as an input; and identifying the type of anomaly of the anomalous nodes.

In an embodiment the method may comprise obtaining a score as an output of the first ML model for the time interval, wherein the score indicates a degree of the anomaly behavior.

In an embodiment the information associated with a plurality of nodes is obtained asynchronously.

In an embodiment the method may comprise creating the first dataset by associating one or more of the obtained parameter values with a node for a time-slice.

In an embodiment the first dataset comprises statistics obtained from a node.

In an embodiment the method may comprise creating the second dataset by evaluating one or more performance metrics associated with a node for a time-slice, wherein the evaluating is done based on the obtained parameter values.

In an embodiment the second dataset comprises information defining time and/or frequency synchronization topology of the network.

In an embodiment the nodes are synchronized by Precision Time Protocol, PTP, or Network Time Protocol, NTP.

In embodiments of the device for monitoring a synchronization status among a plurality of nodes, the device is operative to carry out the embodiments of the method described above.

### BRIEF DESCRIPTION OF THE DRAWINGS

For better understanding of the present disclosure, and to show more readily how the invention may be put into effect, reference will now be made, by way of example, to the following drawings, in which:
Figure 1a is a schematic overview depicting an example of a communication system using a device according to embodiments;
Figure 1b is a schematic overview depicting a further example of a communication system using a device according to embodiments;
Figure 2 shows a flowchart illustrating a method performed by a device according to embodiments;
Figure 3a shows an example of a first dataset according to embodiments;
Figure 3b shows an example of a second dataset according to embodiments;
Figure 3c shows a flow chart illustrating example of steps and functions for performing a method according to embodiments;
Figure 4 shows a graph representing an example of a network topology where the present invention may be practiced according to embodiments;
Figure 5a shows an example of a network topology and an anomaly behavior of a node detected performing a method according to embodiments;
Figure 5b shows a further example of a network topology and an anomaly behavior of a node detected performing a method according to embodiments;
Figure 6 is a block diagram depicting a device according to embodiments; and
Figure 7 is a block diagram depicting units of a device according to embodiments.

### DETAILED DESCRIPTION

Embodiments will be illustrated herein with reference to the accompanying drawings. These embodiments are provided by way of example so that this disclosure will be thorough and complete, and will fully convey the scope of the inventive concept to those skilled in the art.

Fault identification, fault localization, and root cause analysis are aspects to address to guarantee reliability of a distributed synchronization function. However, current synchronization troubleshooting tools may detect the presence of a synchronization issue, but lack in providing information on the location and cause of the fault in a complex network of heterogeneous nodes.

An anomalous behavior of a node in a communication network may be due to a local error or because one or more nodes providing synchronization are having problems. By using a Machine Learning, ML, model and information on nodes and on evolution of a network synchronization topology of the nodes, a device may detect, localize, and identify anomalous nodes and a root of the anomalous behavior. The disclosed invention reduces domain expert intervention and time to solution, and provides scalability in case of increasing number and heterogeneity of nodes in the network.

Figure la schematically shows an example of a communications system in which the present invention may be practiced. The illustrative communications system comprises a device 101 for monitoring a synchronization status among a plurality of nodes 102-107, the plurality of nodes 102-107, and a network management system, NMS 110. While for simplicity and brevity of the disclosure in the drawings the NMS 110 is represented as a single network element, it would be clear to a person skilled in the art that a network management system may be implemented using several network elements.

The plurality of nodes 102-107 may be hardware devices connected to form networks and implemented in any type of technologies, these nodes may perform various functions in the network, such as baseband, router, microwave system, and packet fronthaul. The plurality of nodes 102-107 may or may not exhibit an anomalous behaviour. This anomalous behaviour may be due to, for example, interrupted connections, out of service events, poor quality of synchronization that a node can provide. The nodes 102-107 may be synchronized by a networking protocol for clock synchronization, such as Precision Time Protocol, PTP, for data plane, and Network Time Protocol, NTP, for control plane.

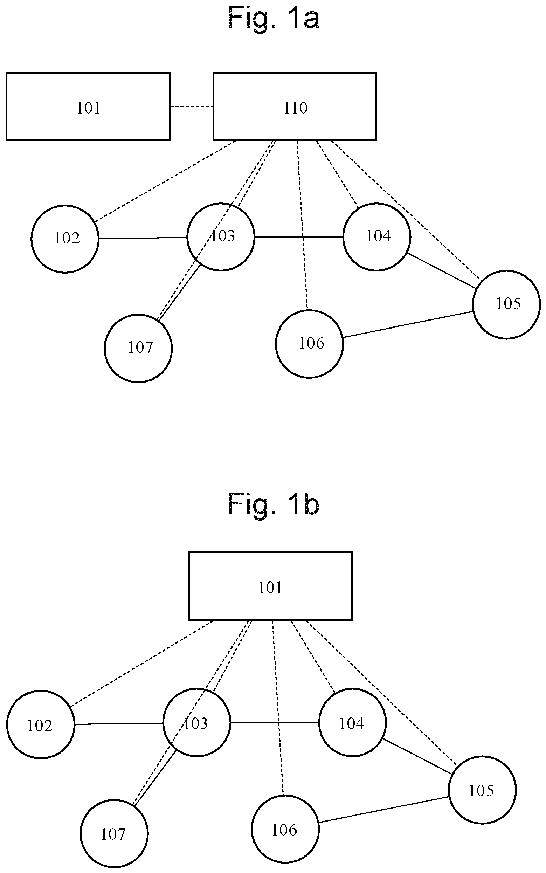

The device 101 and the NMS 110 may be hosted on the same physical device, such as a router, gateway, and any device with computing, storage, and network connectivity to the communication network when active, as shown in Figure 1b. In another embodiment, the devices 101 and the NMS 110 may be stand-alone physical devices. Furthermore, functionalities performed by device 101 and the NMS 110 may be performed in a plurality of physically separated nodes arranged in a cloud environment or by a centralized entity.

In a preferred embodiment, the NMS 110 executes management applications that monitor and control the plurality of nodes, 102-107, communicates with the plurality of nodes 102-107, and collects information associated with the plurality of nodes 102-107, through a network monitoring protocol, such as Simple Network Management Protocol, SNMP, IP Flow Information Export, IPFIX, and Sample Flow, sFlow.

The device 101 may receive information collected by the NMS 110 as shown in Figure 1a through a protocol such as Secure Shell/ Transport Layer Security, SSH/TLS, File Transfer Protocol, FTP/SFTP, Secure Copy, SC; or the device 101 may receive information from the plurality of nodes 102-107 as shown in Figure 1b, through a protocol such as SSH/TLS, SNMP, NETCON.

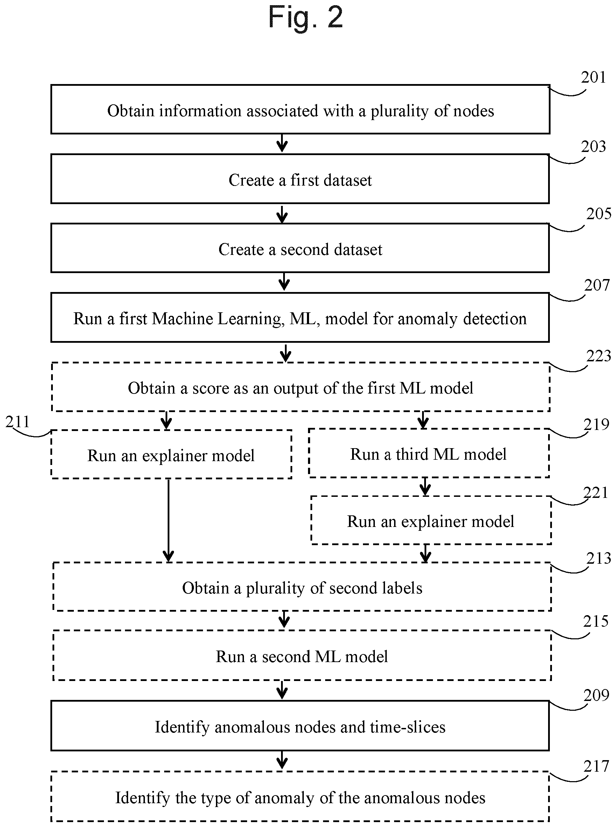

Figure 2 shows a method for monitoring a synchronization status among a plurality of nodes 102-107 operating in a communications network. The method may be carried out by a device 101.

Referring to the method in Figure 2, in step 201, the device 101 obtains 201 information associated with a plurality of nodes 102-107. According to an embodiment, the information associated with the plurality of nodes 102-107 may be obtained asynchronously, i.e. the process of reading (capturing, obtaining) the information is not synchronized amongst the nodes. The device 101 may obtain the information from an NMS 110 that previously collected the information from the nodes 102-107 or directly from the nodes 102-107 as illustrated in Figures 1a and 1b, respectively.

The information obtained for a node (one of the nodes 102-107) is indicative of one or more parameter values characterizing operation of the node at a point in time. A parameter value may vary continuously over time or be discrete. Examples of parameter values in case of PTP protocol are indicated in ITU-T G.8275.1 / Y.1369.1, such as defaultDS.clockIdentity that uniquely identifies a clock; currentDS.stepsRemoved that indicates a distance between a slave clock and a grandmaster clock in the network; parentDS.parentPortIdentity that specifies a value of a portIdentity of a port on a master node that issues a Sync messages used in synchronizing the local clock; parentDS.grandmasterIdentity that indicates the clock identity for the grandmaster clock; portDS.portIdentity.clockIdentity that specifies the values of clockIdentity and portIdentity for each node port; portDS.portState that indicates the PTP port state for each node port (Master, Passive, Uncalibrated, Slave). The parameter values have been sampled at a time interval, such as 15 minutes.

In step 203, the device 101 creates 203 a first dataset based on the obtained information associated with the plurality of nodes 102-107. The first dataset comprises a plurality of tables associated with the plurality of nodes 102-107. A table is associated with a node. An entry of the table associated with the node comprises time-aligned samples of the one or more parameters associated with the node, wherein the one or more parameters sampled at a point in time have been mapped to a corresponding time interval. The table associated with the node comprises one or more entries referring to one or more time intervals. The plurality of tables may comprise different parameter values. According to an embodiment, the first dataset may further comprise statistics associated with the node 102-107. The statistics may be obtained directly from the node 102-107 and may be calculated based on parameter values collected at the node during a time interval and characterizing operation of the node. Obtaining statistics from the node 102-107 instead of parameters for determining the statistics may reduce the number of transmissions between the node 102-107 and the device 101, and processing time to determine the statistics. However, in an alternative embodiment at least some parameters for determining the statistics may be received from the node.

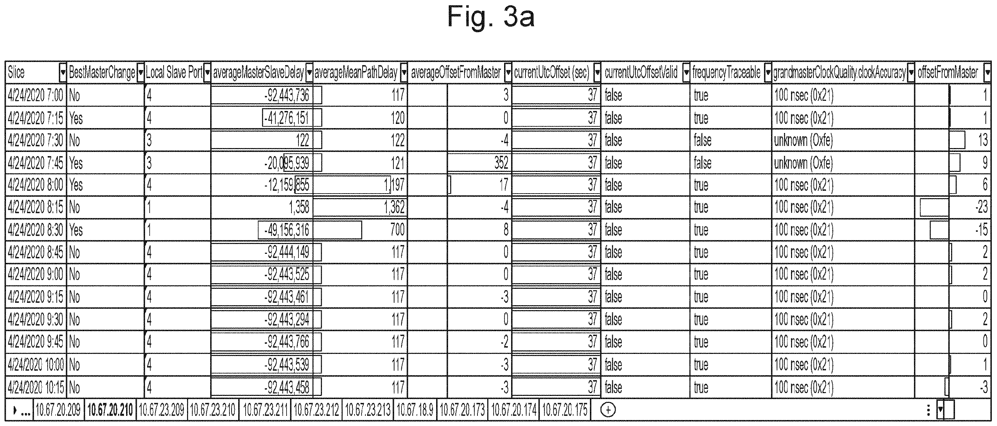

Figure 3a shows an example of a table of a first dataset with 14 entries corresponding to different time-slices of the day 2020-04-24 in which parameters and statistics have been collected for a node with IP address 10.67.20.210. The parameters and statistics comprise BestMasterChange that indicates whether a Best Master Clock Algorithm, BMCA, selected another Slave port or not in a time-slice, localSlavePort that indicates which port the node received synchronization information from at the time of sampling, averageMasterSlaveDelay, averageMeanPathDelay, averageOffsetFromMaster, currentUtcOffset, currentUtcOffsetValid, frequency Traceable, grandmasterClockQuality.clockAccuracy, offsetFromMaster. Further parameters and statistics may also be obtained from a node and their examples can be found in IEEE - P1588/D1.6 Annex M. Figure 3a also shows that similar data can be obtained for other nodes in the network - IP addresses of the other nodes are specified at the bottom of the table (e.g. 10.67.20.209, 10.67.23.209, etc.), but the data obtained is not shown.

In step 205, the device 101 creates 205 a second dataset in a form of a plurality of time-slices comprising samples from the first dataset and statistics determined based on the samples from the first dataset calculated for the time interval. The second dataset may also comprise statistics of the first dataset. The samples and the statistics represent features for the second dataset.

According to an embodiment, the second dataset is created by aligning in time the plurality of tables of the first dataset. The time alignment may be done in respect of the same frequency of the statistical data available at the NMS 110 and it may be required if the nodes 102-107 are implemented using different technologies. The time alignment of the plurality of tables associated with the plurality of nodes is ensured by the use, for example, of NTP as synchronization protocol for the control plane of the plurality of nodes 102-107, specifically for the synchronization of performance and alarm collection.

The second dataset provides a network time and/or frequency synchronization topology for each time-slice, i.e. a topological snapshot of the network from a synchronization point of view. The network synchronization topology is a directed graph describing a hierarchical master-slave architecture for clock distribution. The network synchronization topology may dynamically change in each time-slice, depending on anomalous events, such as interrupted connections, out of service events, poor quality of the synchronization that a node can provide.

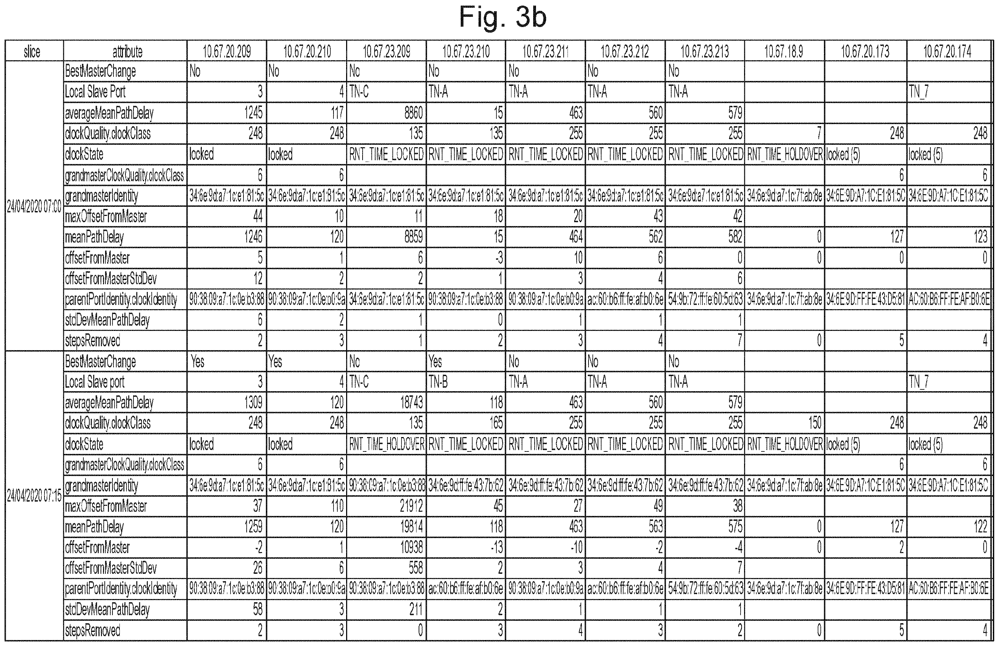

Figure 3b shows an example of a second dataset with entries for ten nodes referring to 2 time-slices (called slice in Figure 3b) and comprising parameter values characterizing operation of the node and statistics (called attributes in Figure 3b) such as BestMasterChange, LocalSlavePort, averageMeanPathDelay, clockQualitty.clockClass, clockState, grandmasterClockQuality.clockClass, grandmasterIdentity, maxOffsetFromMaster, meanPathDelay, offsetFromMaster, offsetFromMasterStdDev, parentPortIdentity.clockIdentity.

In step 207, the device 101 runs 207 a first Machine Learning, ML, model for anomaly detection on the first dataset. The first ML model may be an unsupervised ML model, such as Isolation Forest. The first ML model takes as an input the first dataset and generates as an output first labels identifying anomalous nodes. A first label indicates if a node 102-107 for a time interval exhibits an anomalous behavior or not.

In step 209, the device 101 identifies 209 nodes 102, 103 and 107 as anomalous as well as time-slices during which the nodes 102, 103 and 107 exhibit anomalous behavior by using the output of the first ML model. Moreover, the device 101 uses the second dataset to determine relationships between the anomalous nodes 102, 103 and 107 and other nodes 104-106 of the network synchronization topology. The knowledge of the nodes 102, 103 and 107 that exhibit anomalous behavior provided by the first ML model and the knowledge of the dynamic variation of the network synchronization topology provided by the second dataset provide an operator or user with information about which node originated the problem in the network synchronization topology. In particular, the second dataset provides information about how the anomalous node is correlated with the other nodes in the network synchronization topology, wherein some of the other nodes may exhibit an anomalous behavior. In case of PTP protocol and as defined in in ITU-T G-8275.1, for example, a network synchronization topology represents a hierarchical master-slave architecture, wherein nodes may be masters or slaves. A master is a node distributing time to slaves and may also be a Grandmaster, GM, that gets its time from a primary reference source, such as a GPS satellite signal. A slave is a node that is remote from the master and is synchronizing to it. For example, if a slave node exhibits an anomalous behavior, the root of the anomaly may be the master or grandmaster node. And this may be understood thanks to the knowledge of the network synchronization topology at different points in time.

An example of the use of the second dataset is herein provided by referring to Figure 3b. The two time-slices refer to a 15 minutes interval of the day 2020-04-24. Supposing that an output of the first ML model indicated node 10.67.20.209 as anomalous, the second dataset in Figure 3b may be used to understand if node 10.67.20.209 is actually the root of the anomaly or if its anomalous behavior is caused by another node up in the synchronization topology hierarchy. In the table in Figure 3b, the values of parameters LocalSlavePort, GrandmasterIdentity, parentPortIdentity, and stepsRemoved in the 07:15 time-slice have not changed compared with the previous time-slice (07:00), but the value of the parameter BestMasterChange changed from "No" to "Yes". This means that the Best Master Clock Algorithm running on node 10.67.20.209 has changed the synchronization source during the time-slice at least once. This value is an indication of anomalous behavior and confirms the output of the first ML model, however the root of the anomalous behavior may be a node up in the synchronization topology hierarchy, since the Best Master Clock Algorithm of node 10.67.20.209 decided to change the synchronization source. Therefore, the next step would be to check the behavior of the nodes up in the hierarchy. Note that the values of parameters LocalSlavePort, GrandmasterIdentity, parentPortIdentity, and stepsRemoved have not changed because the topology change took place when the data relating to the node 10.67.20.209 had already been sampled, therefore without the parameters BestMasterChange the behavior of the node 10.67.20.209 would have seemed regular and not anomalous.

According to optional embodiments, the device 101 provides also information on a type of anomaly that a node exhibits. Examples of types of anomalies are false anomaly that indicates the presence of an anomaly even though there is no anomaly; slow delay variations that indicate a delay causing a clock drift and a consequent phase misalignment among downstream nodes and fast delay variations that indicate a delay that may cause a change of synchronization source; Global Navigation Satellite System, GNSS, failure that indicates a damage to an antenna cabling or antenna, a local jamming, or a bad download of data from satellites; PTP failure, that indicates a network outage or an increase in network congestion. Two alternative embodiments for determining the type of anomaly will be described herein.

According to first embodiments and in the optional step 211, after running 207 the first ML model for anomaly detection on the first dataset, the device 101 runs 211 an explainer model on the first ML model and on the first dataset. An explainer model (also referred to as interpret ML model) is a tool for interpreting predictions of a ML model and associating an importance value with each predictor. In other words, the explainer model helps determining which features are the most important for the model and how they contribute to the predictions. Examples of explainer models comprise SHAP, LIME, InterpretML, and ELI5. An output of the explainer model may be a plurality of feature importance vectors for the time interval, wherein a feature importance vector is a vector of scalar numbers in the range [0,1] associated with a feature. In other words, the explainer model generates as output a feature importance vector for each anomalous node 102, 103 and 107 at a time-slice.

In the next optional step 213, the device 101 obtains a plurality of second labels associated with the feature importance vectors. A second label is associated with a feature importance vector by an expert. The second label indicates a type of anomaly. The expert explicitly labels the feature importance vectors associated with nodes for time interval based on his/her domain expertise gained from studying the anomalies generated in a controlled test environment or in a known network environment. A second ML model takes as input the labeled feature importance vectors in a training phase of the model.

In the next optional step 215, the device 101 runs 215 a second ML model taking a plurality of feature importance vectors as an input. The output of the second ML model is an indication of a type of anomaly exhibited by a node for a time interval corresponding to a feature importance vector used as an input of the second ML model. The second ML model is a supervised ML model, such as Random Forest. Alternatively, a different supervised ML model may be used.

According to alternative embodiments, after running 207 the first ML model for anomaly detection on the first dataset, the device 101 runs 219 a third ML model on the first dataset and the plurality of associated first labels obtained from the first ML model, in step 219. The third ML model may be a supervised ML model, such as Random Forest.

In the next optional step 221, the device 101 runs 221 an explainer model on the third ML model and the first dataset. An output of the explainer model is a plurality of feature importance vectors for the time interval. In other words, each node for a time interval is associated with a feature importance vector.

In the next optional step 213, the device 101 obtains a plurality of second labels associated with the feature importance vectors. The second labels indicate a type of anomaly and a second label is associated with a feature importance vector by an expert. The expert explicitly labelled the feature importance vectors for a time interval according to the anomalies generated in a controlled test environment or in a known network environment based on domain expertise. A second ML model takes as input the labeled feature importance vectors in a training phase of the model.

In the next optional step 215, the device 101 runs 215 a second ML model taking the plurality of the feature importance vectors as an input. The output of the second ML model is an indication of a type of anomaly exhibited by a node for a time interval corresponding to a feature importance vector used as an input of the second ML model. The second ML model is a supervised ML model, such as Random Forest.

In the next optional step 217, the indication of the anomaly type produced in step 215 is associated with the corresponding anomalous node 102, 103 and 107. If an indication of an anomaly type of a node is for example 'false anomaly , it may help detect an erroneous identification of the node as anomalous in step 207.

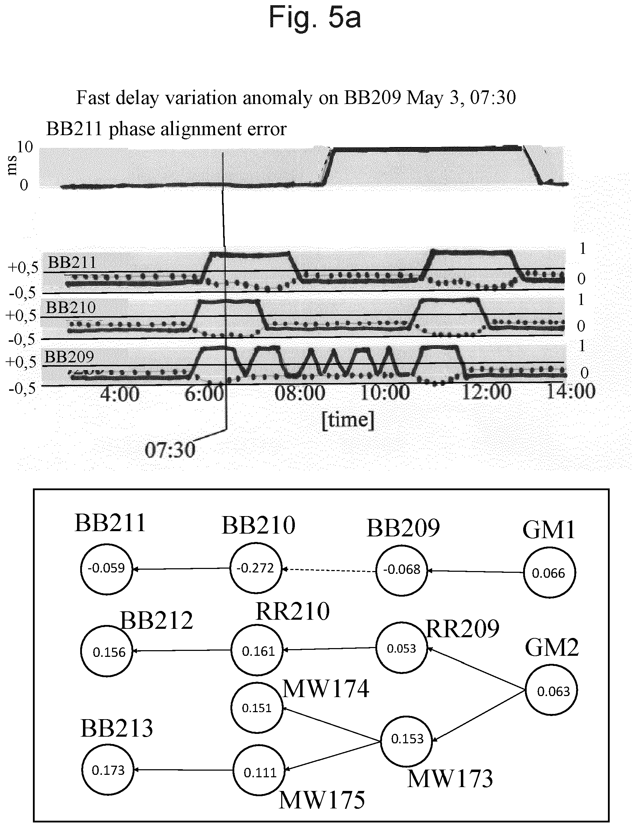

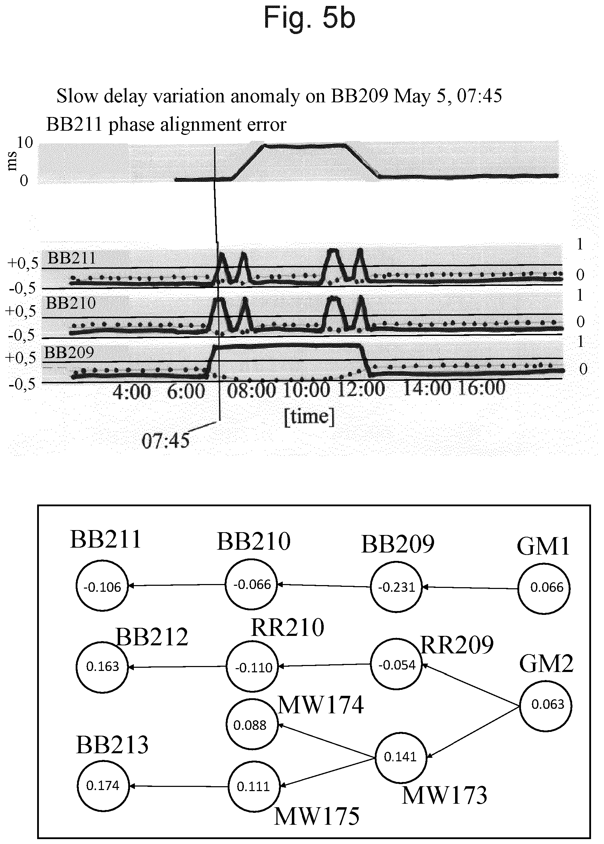

According to an embodiment in an optional step 223, the first ML model generates as an output also a score for a node in a time interval. The score indicates a degree of the anomaly. The score may be used to graphically represent anomalous nodes 102, 103 and 107 in a topology graph: an anomaly score added to each node of the topology graph or a color intensity proportional to the absolute value of the anomaly score may allow the localization of a node that exhibit an anomalous behavior and the degree of such anomalous behavior. In an alternative embodiment the anomaly score may be used directly as a numerical value as illustrated in the bottom graphs presented in Figures 5a and 5b, where negative values indicate anomalous behavior and the lower the score the more severe the anomaly. A positive score indicates a non-anomalous behavior.

In some embodiments the First, Second, and Third ML models may be trained before being used. The three ML models may be trained offline or at scheduled time. If desired the method could be further improved by use of a validation process as known in the art.

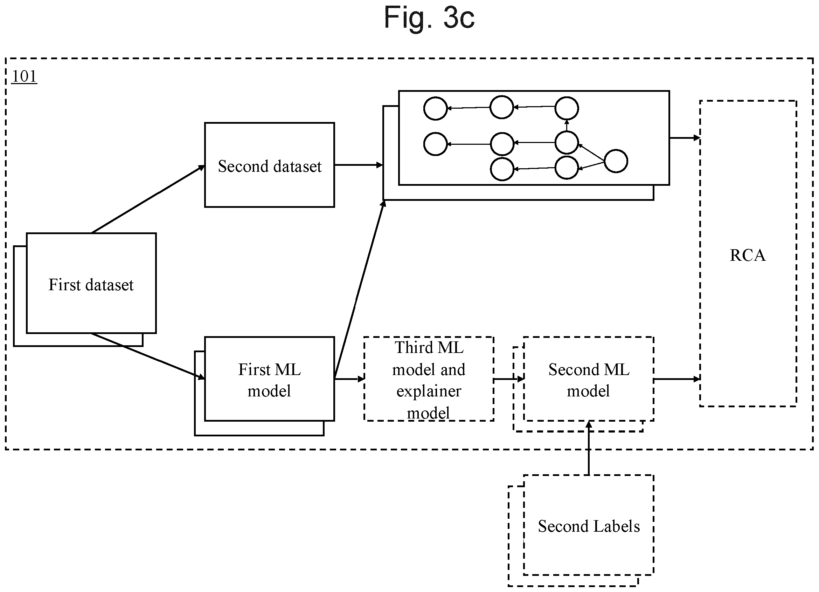

Figure 3c shows a flow chart illustrating example of steps and functions for performing a method according to embodiments. Two functional paths may be identified: a domain independent path providing an anomaly classification and a domain dependent path providing a topology localization of the anomaly.

In the domain independent path, the first dataset, generated by performing steps 201 and 203, is used as an input to a first ML model. The first ML model is performed according to step 207 and generates as an output first labels identifying anomalous nodes 102, 103 and 107. An output of the first ML model is then used as an input of the third ML model and the explainer model, according to steps 219 and 211. The output of the explainer model and second labels obtained performing step 213 are used as input of a second ML model according to step 215. The second ML model provides anomaly classification according to step 217.

In the domain dependent path, the first dataset is used to create a second dataset according to step 203. The anomalous nodes 102, 103 and 107 identified by the first ML model are mapped on a network synchronization topology obtained from the second dataset and filtered according to topology dependencies to locate a root cause of an anomaly behavior according to step 209.

Localization of an anomaly in the topology, i.e. outcome of the domain dependent path, and anomaly classification, i.e. output of the domain independent path, may be combined to deliver relevant Root Cause Analysis, RCA, information to an operator or user.

An example scenario in which the present invention may be practiced is in relation to 5G RAN nodes synchronized using PTP, where radio units exhibit time misalignments detected at the air-interface, but with unknown root cause. In the example scenario, a device 101 may train a first, a second, and a third ML models and apply the trained models according to steps 201-207, 211-215, 219-223 and then perform an RCA according to steps 209 and 217.

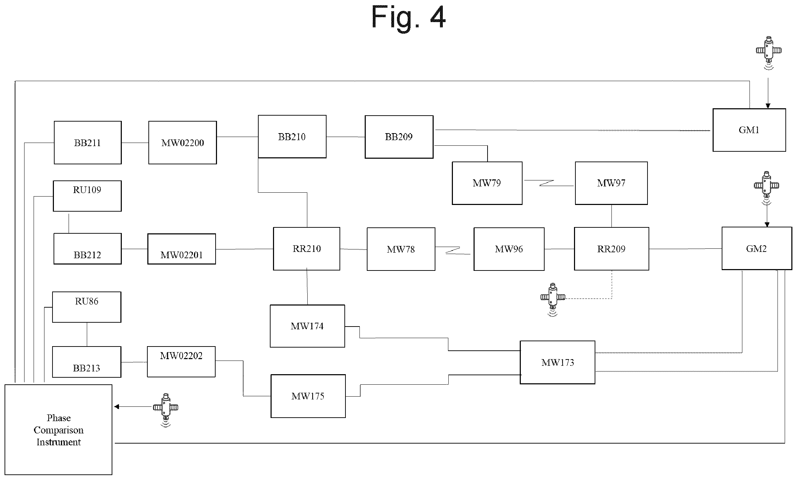

The method disclosed in Figure 2 has been validated in a test network including radio access nodes (radio units, RU, baseband units, BB) and transport nodes (routers, RR, and microwave front-haul units and backhaul units, MW). Two grandmaster nodes (GM1 and GM2) are root timing references and all other clocks synchronize directly to one them by means of PTP. The physical network topology, wherein each node is identified with an acronym indicating the technology and a number, is shown in Figure 4. A first dataset has been split between training set and test set. The test network has been stressed with a number of test cases affecting network synchronization down to the radio interface. Two examples of anomalous behavior are shown in Figure 5a and 5b. The top half of Figure 5a and 5b shows four plots. The first plot shows phase alignment error in milliseconds for node BB211, and the other three plots show score value for nodes BB211, BB210, and BB209. In particular in the other three plots, a dashed line represents a scalar value of the score, wherein the scalar values is within an interval [-0.5, 0.5] and the full line represents the binary value of the score, i.e. 0 or 1. If the scalar value of the score is higher than 0, the binary value of the score is 0 and indicates a regular behavior, if the scalar value of the score is lower than 0, the binary value of the score is 1 and indicates an anomalous behavior. Clock delay and score values have been calculated from 4:00 to 14:00 on May 3 in Figure 5a and from 2:00 to 18:00 on May 5 in Figure 5b. The bottom half of Figures 5a and 5b shows a network synchronization topology obtained at 07:30 am on May 3 and at 07:45 am on May 5, respectively. Note that physical and synchronization topology may be different. Each node of the network synchronization topology comprises a number indicating anomaly score obtained according to step 223 and shown in the corresponding plot. Note that a score value higher than 0 indicates a regular behavior and a score value lower than 0 indicates an anomalous behavior. In Figure 5a, node BB209 at 07:30 am on May 3 shows an anomaly classified by the second ML model according to step 217 as a fast delay variation. Looking at the corresponding synchronization topology graph, BB210 shows the highest anomaly score followed by BB209 and BB211. The link between BB210 and BB209 is dashed because even though the physical link is still present, the two nodes are not logically connected since BB210 disqualified BB209 as synchronization source because of the anomalous behavior.

In Figure 5b, node BB209 at 07:45 am on May 5 shows an anomaly classified by the second ML model according to step 217 as slow delay variation. In the corresponding synchronization topology graph, BB209 shows the highest anomaly behavior followed by BB211, BB210, and RR210.

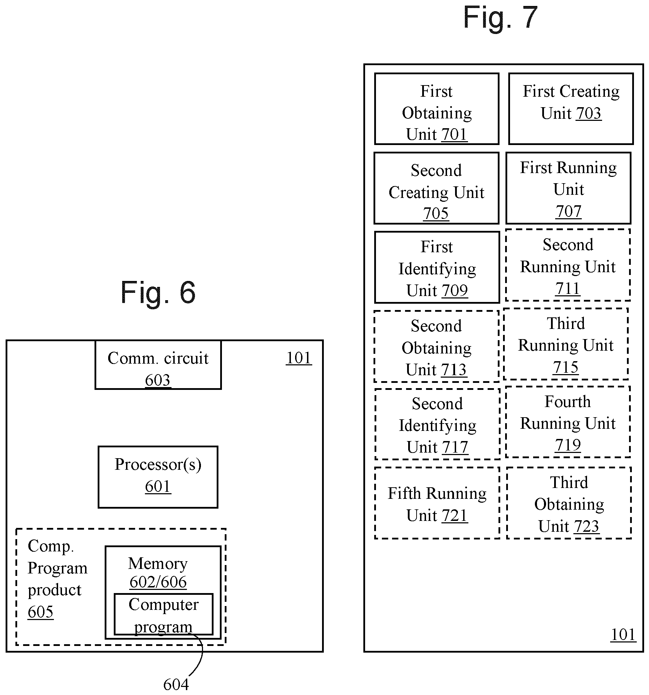

Figure 6 is a block diagram illustrating one embodiment of a device 101, comprising a processor 601, a computer program product 605 in the form of a computer readable storage medium 606 in the form of a memory 602 and communication circuitry 603.

The memory, 602, contains instructions executable by the processor, 601, such that the device 101, is operative to obtain, 202, information associated with a plurality of nodes 102-107. The device 101 may be operative to receive the information from an NMS 110 or similar system, or directly from the plurality of nodes 102-107. The device 101 is operative to create 203 a first dataset based on the obtained associated information and to create 205 a second dataset in form of a plurality of time-slices. The device 101 is further operative to run 207 a first Machine Learning, ML, model for anomaly detection on the first dataset. Then the device 101 is also operative to identify 209 anomalous nodes 102, 103 and 107 and time-slices when the anomalous nodes 102, 103 and 107 exhibit anomalous behavior. In the operation of identifying the device 101 uses the first labels and the second dataset to determine relationships between the anomalous nodes 102, 103, 107 and other nodes 104-106 of the network.

The device, 101, is further operative to run 211 an explainer model on the first ML model and the first dataset. The device 101 may obtain 213 a plurality of second labels associated with the feature importance vectors for the time interval, wherein a second label indicates a type of anomaly. The plurality of second labels may be manually associated with the feature importance vectors for the time interval by an expert. Then, the device 101 may run 215 a second ML model taking the plurality of the feature importance vectors as an input and use the output of the second ML model to identify 217 the type of anomaly of the anomalous nodes 102, 103, 107.

Alternatively, the device 101 is further operative to run 219 a third ML model on the first dataset and a plurality of associated first labels; run 221 an explainer model on the third ML model and the first dataset, wherein an output of the explainer model is a plurality of feature importance vectors for the time interval. The device 101 may obtain 213 a plurality of second labels associated with the feature importance vectors for the time interval, wherein a second label indicates a type of anomaly. The plurality of second labels may be manually associated with the feature importance vectors for the time interval by an expert. Then, the device 101 may run 215 a second ML model taking the plurality of the feature importance vectors as an input and use the output of the second ML model to identify 217 the type of anomaly of the anomalous nodes 102, 103, 107.

The device, 101, is further operative to perform the operations of the method described in the embodiments disclosed earlier.

The device, 101, may include a processing circuitry (one or more than one processor), 601, coupled to communication circuitry, 603, and to the memory 602. The device, 101, may comprise more than one communication circuitry. For example, one communication circuitry may be for connecting to the plurality of nodes 102-107, and another interface may be for connecting to the NMS 110. For simplicity and brevity only one communication circuitry, 603, has been illustrated in Figure 6. By way of example, the communication circuitry, 603, the processor(s) 601, and the memory 602 may be connected in series as illustrated in Figure 6. Alternatively, these components 603, 601and 602 may be coupled to an internal bus system of the device, 101.

The memory 602 may include a Read-Only-Memory, ROM, e.g., a flash ROM, a Random Access Memory, RAM, e.g., a Dynamic RAM, DRAM, or Static RAM, SRAM, amass storage, e.g., a hard disk or solid state disk, or the like.

The computer program product 605 comprises a computer program 605, which comprises computer program code loadable into the processor 601, wherein the computer program 604 comprises code adapted to cause the device 101 to perform the steps of the method described herein, when the computer program code is executed by the processor 601. In other words, the computer program 604 may be a software hosted by the device 101.

It is to be understood that the structures as illustrated in Figure 6 are merely schematic and that the device, 101, may actually include further components which, for the sake of clarity, have not been illustrated, e.g., further interfaces or processors. Also, it is to be understood that the memory, 602, may include further program code for implementing other and/or known functionalities.

It is also to be understood that the device, 101, may be provided as a virtual apparatus. In one embodiment, the device, 101, may be provided in distributed resources, such as in cloud resources. When provided as virtual apparatus, it will be appreciated that the memory, 602, processing circuitry, 601, and communication circuitry, 603, may be provided as functional elements. The functional elements may be distributed in a logical network and not necessarily be directly physically connected. It is also to be understood that the device, 101, may be provided as a single-node device, or as a multi-node system.

Figure 7 schematically illustrates, in terms of a number of functional units, the components of a device 101 according to an embodiment. The device 101 comprises a first obtaining unit 701 configured to obtain 201 information associated with a plurality of nodes 102-107; a first creating unit 703 configured to create 203 a first dataset based on the obtained information associated with the plurality of nodes 102-107; a second creating unit 705 configured to create 205 a second dataset in form of a plurality of time-slices; a first running unit 707 configured to run 207 a first Machine Learning, ML, model for anomaly detection on the first dataset; a first identifying unit 709 configured to identify 209 anomalous nodes 102, 103 and 107 and time-slices when the anomalous nodes 102, 103 and 107 exhibit anomalous behavior using the first labels and the second dataset to determine relationships between the anomalous nodes 102, 103, 107 and other nodes 104-106 of the network.

Then the device 101 illustrated in Figure 7 may optionally further comprise: a second running unit 711 configured to run 211 an explainer model on the first ML model and the first dataset; a second obtaining unit 713 configured to obtain 213 a plurality of second labels associated with the feature importance vectors for the time interval; a third running unit 715 configured to run 215 a second ML model taking the plurality of the feature importance vectors as an input; a second identifying unit 717 configured to identify 217 the type of anomaly of the anomalous nodes 102, 103 and 107 ; a fourth running unit 719 configured to run 219 a third ML model on the first dataset and a plurality of associated first labels; a fifth running unit 721 configured to run 221 an explainer model on the third ML model and the first dataset; a third obtaining unit 723 configured to obtain 223 a score as an output of the first ML model for the time interval.

## Claims

1. A method for monitoring a synchronization status among a plurality of nodes (102-107) operating in a communications network, the method comprising:
- obtaining (201) information associated with a plurality of nodes (102-107), the nodes (102-107) having synchronized clocks, wherein an information for a node (102-107) is indicative of one or more parameter values;
- creating (203) a first dataset based on the obtained information associated with the plurality of nodes (102-107), the first dataset comprising time-aligned samples of the one or more parameters for a time interval;
- creating (205) a second dataset in form of a plurality of time-slices comprising the samples from the first dataset and statistics determined based on the samples from the first dataset calculated for the time interval;
- running (207) a first Machine Learning, ML, model for anomaly detection on the first dataset, the first ML model generating first labels identifying anomalous nodes (102, 103, 107);
- identifying (209) anomalous nodes (102, 103, 107) and time-slices when the anomalous nodes (102, 103, 107) exhibit anomalous behavior using the first labels and the second dataset to determine relationships between the anomalous nodes (102, 103, 107) and other nodes (104-106) of the network.

2. The method according to claim 1, further comprising:
- running (211) an explainer model on the first ML model and the first dataset, wherein an output of the explainer model is a plurality of feature importance vectors for the time interval;
- obtaining (213) a plurality of second labels associated with the feature importance vectors for the time interval, wherein a second label indicates a type of anomaly;
- running (215) a second ML model taking the plurality of the feature importance vectors as an input;
- identifying (217) the type of anomaly of the anomalous nodes (102, 103, 107).

3. The method according to claim 1, further comprising:
- running (219) a third ML model on the first dataset and a plurality of associated first labels;
- running (221) an explainer model on the third ML model and the first dataset, wherein an output of the explainer model is a plurality of feature importance vectors for the time interval;
- obtaining (213) a plurality of second labels associated with the feature importance vectors for the time interval, wherein a second label indicates a type of anomaly;
- running (215) a second ML model taking the plurality of the feature importance vectors as an input;
- identifying (217) the type of anomaly of the anomalous nodes (102, 103, 107).

4. A device (101) for monitoring a synchronization status among a plurality of nodes (102-107) operating in a communications network, the device (101) comprising a processor (601) and a memory (602), the memory (602) having stored thereon instructions executable by the processor (601), wherein the instructions, when executed by the processor (601), cause the device (101) to:
- obtain (201) information associated with a plurality of nodes (102-107), the nodes (102-107) having synchronized clocks, wherein an information for a node (102-107) is indicative of one or more parameter values;
- create (203) a first dataset based on the obtained information associated with the plurality of nodes (102-107), the first dataset comprising time-aligned samples of the one or more parameters for a time interval;
- create (205) a second dataset in form of a plurality of time-slices comprising the samples from the first dataset and statistics determined based on the samples from the first dataset calculated for the time interval;
- run (207) a first Machine Learning, ML, model for anomaly detection on the first dataset, the first ML model generating first labels identifying anomalous nodes (102, 103, 107);
- identify (209) anomalous nodes (102, 103, 107) and time-slices when the anomalous nodes (102, 103, 107) exhibit anomalous behavior using the first labels and the second dataset to determine relationships between the anomalous nodes (102, 103, 107) and other nodes (104-106) of the network.

5. The device (101) according to claim 4, wherein the instructions, when executed by the processor (601), cause the device (101) to
- run (211) an explainer model on the first ML model and the first dataset, wherein an output of the explainer model is a plurality of feature importance vectors for the time interval;
- obtain (213) a plurality of second labels associated with the feature importance vectors for the time interval, wherein a second label indicates a type of anomaly;
- run (215) a second ML model taking the plurality of the feature importance vectors as an input;
- identify (217) the type of anomaly of the anomalous nodes (102, 103, 107).

6. The device (101) according to claim 4, wherein the instructions, when executed by the processor (601), cause the device (101) to
- run (219) a third ML model on the first dataset and a plurality of associated first labels;
- run (221) an explainer model on the third ML model and the first dataset, wherein an output of the explainer model is a plurality of feature importance vectors for the time interval;
- obtain (213) a plurality of second labels with the feature importance vectors for the time interval, wherein a second label indicates a type of anomaly;
- run (215) a second ML model taking the plurality of the feature importance vectors as an input;
- identify (217) the type of anomaly of the anomalous nodes (102, 103, 107).

7. The device (101) according to any one of claims 4 to 6, wherein the instructions, when executed by the processor (601), cause the device (101) to
- obtain (223) a score as an output of the first ML model for the time interval, wherein the score indicates a degree of the anomaly behavior.

8. The device according to any one of claims 4 to 7, wherein the information associated with a plurality of nodes (102-107) is obtained asynchronously.

9. The device (101) according to any one of claims 4 to 8, wherein the instructions, when executed by the processor (601), cause the device (101) to create (203) the first dataset by associating one or more of the obtained parameter values with a node (102-107) for a time-slice.

10. The device (101) according to any one of claims 4 to 9, wherein the first dataset comprises statistics obtained from a node (102-107).

11. The device (101) according to any one of claims 4 to 10, wherein the instructions, when executed by the processor (601), cause the device (101) to create (205) the second dataset by aligning in time the obtained parameter values associated with a node (102-107) for a time-slice.

12. The device (101) according to any one of claims 4 to 11, wherein the instructions, when executed by the processor (601), cause the device (101) to create (203) the second dataset by evaluating one or more performance metrics associated with a node (102-107) for a time-slice, wherein the evaluating is done based on the obtained parameter values.

13. The device (101) according to any one of claims 4 to 12, wherein the second dataset comprises information defining time and/or frequency synchronization topology of the network.

14. A computer program (604) comprising instructions which, when run in a processing unit on a device (101), cause the device (101) to:
- obtain (201) information associated with a plurality of nodes (102-107), the nodes (102-107) having synchronized clocks, wherein an information for a node (102-107) is indicative of one or more parameter values;
- create (203) a first dataset based on the obtained information associated with the plurality of nodes (102-107), the first dataset comprising time-aligned samples of the one or more parameters for a time interval;
- create (205) a second dataset in form of a plurality of time-slices comprising the samples from the first dataset and statistics determined based on the samples from the first dataset calculated for the time interval;
- run (207) a first Machine Learning, ML, model for anomaly detection on the first dataset, the first ML model generating first labels identifying anomalous nodes (102, 103, 107);
- identify (209) anomalous nodes (102, 103, 107) and time-slices when the anomalous nodes (102, 103, 107) exhibit anomalous behavior using the first labels and the second dataset to determine relationships between the anomalous nodes (102, 103, 107) and other nodes (104-106) of the network.

15. A computer program product (605) comprising a computer readable storage medium (606) on which a computer program (604) according to claim 14 is stored.

## Patentansprüche

1. Verfahren zum Überwachen eines Synchronisierungsstatus unter einer Vielzahl von Knoten (102-107), die in einem Kommunikationsnetzwerk arbeiten, wobei das Verfahren umfasst:
- Erhalten (201) von Informationen, die einer Vielzahl von Knoten (102-107) zugeordnet sind, wobei die Knoten (102-107) synchronisierte Takte aufweisen, wobei eine Information für einen Knoten (102-107) einen oder mehrere Parameterwerte angibt;
- Erzeugen (203) eines ersten Datensatzes auf Basis der erhaltenen Informationen, die der Vielzahl von Knoten (102-107) zugeordnet sind, wobei der erste Datensatz zeitlich ausgerichtete Abtastungen des einen oder der mehreren Parameter für ein Zeitintervall umfasst;
- Erzeugen (205) eines zweiten Datensatzes in Form einer Vielzahl von Zeitscheiben, die die Abtastungen aus dem ersten Datensatz und Statistiken umfassen, die auf Basis der Abtastungen aus dem für das Zeitintervall berechneten ersten Datensatz bestimmt werden;
- Ausführen (207) eines ersten Maschinenlern-, ML-, Modells, zur Anomalieerkennung am ersten Datensatz, wobei das erste ML-Modell erste Etiketten generiert, die anomale Knoten (102, 103, 107) identifizieren;
- Identifizieren (209) von anomalen Knoten (102, 103, 107) und Zeitscheiben, wenn die anomalen Knoten (102, 103, 107) anomales Verhalten zeigen, unter Verwendung der ersten Etiketten und des zweiten Datensatzes, um Beziehungen zwischen den anomalen Knoten (102, 103, 107) und anderen Knoten (104-106) des Netzwerks zu bestimmen.

2. Verfahren nach Anspruch 1, weiter umfassend:
- Ausführen (211) eines Erklärungsmodells am ersten ML-Modell und dem ersten Datensatz, wobei ein Ausgang des Erklärungsmodells eine Vielzahl von Merkmalsbedeutungsvektoren für das Zeitintervall ist;
- Erhalten (213) einer Vielzahl von zweiten Etiketten, die den Merkmalsbedeutungsvektoren für das Zeitintervall zugeordnet sind, wobei ein zweites Etikett einen Anomalietyp angibt;
- Ausführen (215) eines zweiten ML-Modells, das die Vielzahl der Merkmalsbedeutungsvektoren als Eingang hernimmt;
- Identifizieren (217) des Anomalietyps der anomalen Knoten (102, 103, 107).

3. Verfahren nach Anspruch 1, weiter umfassend:
- Ausführen (219) eines dritten ML-Modells am ersten Datensatz und einer Vielzahl von zugeordneten ersten Etiketten;
- Ausführen (221) eines Erklärungsmodells am dritten ML-Modell und dem ersten Datensatz, wobei ein Ausgang des Erklärungsmodells eine Vielzahl von Merkmalsbedeutungsvektoren für das Zeitintervall ist;
- Erhalten (213) einer Vielzahl von zweiten Etiketten, die den Merkmalsbedeutungsvektoren für das Zeitintervall zugeordnet sind, wobei ein zweites Etikett einen Anomalietyp angibt;
- Ausführen (215) eines zweiten ML-Modells, das die Vielzahl der Merkmalsbedeutungsvektoren als Eingang hernimmt;
- Identifizieren (217) des Anomalietyps der anomalen Knoten (102, 103, 107).

4. Vorrichtung (101) zum Überwachen eines Synchronisierungsstatus unter einer Vielzahl von Knoten (102-107), die in einem Kommunikationsnetzwerk arbeiten, wobei die Vorrichtung (101) einen Prozessor (601) und einen Speicher (602) umfasst, wobei auf dem Speicher (602) Anweisungen gespeichert sind, die vom Prozessor (601) ausführbar sind, wobei die Anweisungen, wenn sie vom Prozessor (601) ausgeführt werden, veranlassen, dass die Vorrichtung (101):
- Informationen erhält (201), die einer Vielzahl von Knoten (102-107) zugeordnet sind, wobei die Knoten (102-107) synchronisierte Takte aufweisen, wobei eine Information für einen Knoten (102-107) einen oder mehrere Parameterwerte angibt;
- auf Basis der erhaltenen Informationen, die der Vielzahl von Knoten (102-107) zugeordnet sind, einen ersten Datensatz erzeugt (203), wobei der erste Datensatz zeitlich ausgerichtete Abtastungen des einen oder der mehreren Parameter für ein Zeitintervall umfasst;
- einen zweiten Datensatz in Form einer Vielzahl von Zeitscheiben erzeugt (205), die die Abtastungen aus dem ersten Datensatz und Statistiken umfassen, die auf Basis der Abtastungen aus dem für das Zeitintervall berechneten ersten Datensatz bestimmt werden;
- ein erstes Maschinenlern-, ML-, Modell zur Anomalieerkennung am ersten Datensatz ausführt (207), wobei das erste ML-Modell erste Etiketten erzeugt, die anomale Knoten (102, 103, 107) identifizieren;
- anomale Knoten (102, 103, 107) und Zeitscheiben, wenn die anomalen Knoten (102, 103, 107) anomales Verhalten zeigen, unter Verwendung der ersten Etiketten und des zweiten Datensatzes identifiziert (209), um Beziehungen zwischen den anomalen Knoten (102, 103, 107) und anderen Knoten (104-106) des Netzwerks zu bestimmen.

5. Vorrichtung (101) nach Anspruch 4, wobei die Anweisungen, wenn sie vom Prozessor (601) ausgeführt werden, veranlassen, dass die Vorrichtung (101)
- ein Erklärungsmodell am ersten ML-Modell und dem ersten Datensatz ausführt (211), wobei ein Ausgang des Erklärungsmodells eine Vielzahl von Merkmalsbedeutungsvektoren für das Zeitintervall ist;
- eine Vielzahl von zweiten Etiketten erhält (213), die den Merkmalsbedeutungsvektoren für das Zeitintervall zugeordnet sind, wobei ein zweites Etikett einen Anomalietyp angibt;
- ein zweites ML-Modell ausführt (215), das die Vielzahl der Merkmalsbedeutungsvektoren als Eingang hernimmt;
- den Anomalietyp der anomalen Knoten (102, 103, 107) identifiziert (217).

6. Vorrichtung (101) nach Anspruch 4, wobei die Anweisungen, wenn sie vom Prozessor (601) ausgeführt werden, veranlassen, dass die Vorrichtung (101)
- ein drittes ML-Modell am ersten Datensatz und einer Vielzahl von zugeordneten ersten Etiketten ausführt (219);
- ein Erklärungsmodell am dritten ML-Modell und dem ersten Datensatz ausführt (221), wobei ein Ausgang des Erklärungsmodells eine Vielzahl von Merkmalsbedeutungsvektoren für das Zeitintervall ist;
- eine Vielzahl von zweiten Etiketten mit den Merkmalsbedeutungsvektoren für das Zeitintervall erhält (213), wobei ein zweites Etikett einen Anomalietyp angibt;
- ein zweites ML-Modell ausführt (215), das die Vielzahl der Merkmalsbedeutungsvektoren als Eingang hernimmt;
- den Anomalietyp der anomalen Knoten (102, 103, 107) identifiziert (217).

7. Vorrichtung (101) nach einem der Ansprüche 4 bis 6, wobei die Anweisungen, wenn sie vom Prozessor (601) ausgeführt werden, veranlassen, dass die Vorrichtung (101)
- einen Punktwert als Ausgang des ersten ML-Modells für das Zeitintervall erhält (223), wobei der Punktwert einen Grad des Anomalieverhaltens angibt.

8. Vorrichtung nach einem der Ansprüche 4 bis 7, wobei die Informationen, die einer Vielzahl von Knoten (102-107) zugeordnet sind, asynchron erhalten werden.

9. Vorrichtung (101) nach einem der Ansprüche 4 bis 8, wobei die Anweisungen, wenn sie vom Prozessor (601) ausgeführt werden, veranlassen, dass die Vorrichtung (101) den ersten Datensatz erzeugt (203), indem sie einen oder mehrere der erhaltenen Parameterwerte einem Knoten (102-107) für eine Zeitscheibe zuordnet.

10. Vorrichtung (101) nach einem der Ansprüche 4 bis 9, wobei der erste Datensatz Statistiken umfasst, die von einem Knoten (102-107) erhalten werden.

11. Vorrichtung (101) nach einem der Ansprüche 4 bis 10, wobei die Anweisungen, wenn sie vom Prozessor (601) ausgeführt werden, veranlassen, dass die Vorrichtung (101) den zweiten Datensatz erzeugt (205), indem sie die erhaltenen Parameterwerte, die einem Knoten (102-107) zugeordnet sind, für eine Zeitscheibe zeitlich ausrichtet.

12. Vorrichtung (101) nach einem der Ansprüche 4 bis 11, wobei die Anweisungen, wenn sie vom Prozessor (601) ausgeführt werden, veranlassen, dass die Vorrichtung (101) den zweiten Datensatz erzeugt (203), indem sie eine oder mehrere Leistungsmetriken, die einem Knoten (102-107) zugeordnet sind, für eine Zeitscheibe auswertet, wobei die Auswertung auf Basis der erhaltenen Parameterwerte erfolgt.

13. Vorrichtung (101) nach einem der Ansprüche 4 bis 12, wobei der zweite Datensatz Informationen umfasst, die die Zeit- und/oder Frequenzsynchronisationstopologie des Netzwerks definieren.

14. Computerprogramm (604), das Anweisungen umfasst, die, wenn sie in einer Verarbeitungseinheit auf einer Vorrichtung (101) ausgeführt werden, veranlassen, dass die Vorrichtung (101):
- Informationen erhält (201), die einer Vielzahl von Knoten (102-107) zugeordnet sind, wobei die Knoten (102-107) synchronisierte Takte aufweisen, wobei eine Information für einen Knoten (102-107) einen oder mehrere Parameterwerte angibt;
- auf Basis der erhaltenen Informationen, die der Vielzahl von Knoten (102-107) zugeordnet sind, einen ersten Datensatz erzeugt (203), wobei der erste Datensatz zeitlich ausgerichtete Abtastungen des einen oder der mehreren Parameter für ein Zeitintervall umfasst;
- einen zweiten Datensatz in Form einer Vielzahl von Zeitscheiben erzeugt (205), die die Abtastungen aus dem ersten Datensatz und Statistiken umfassen, die auf Basis der Abtastungen aus dem für das Zeitintervall berechneten ersten Datensatz bestimmt werden;
- ein erstes Maschinenlern-, ML-, Modell zur Anomalieerkennung am ersten Datensatz ausführt (207), wobei das erste ML-Modell erste Etiketten erzeugt, die anomale Knoten (102, 103, 107) identifizieren;
- anomale Knoten (102, 103, 107) und Zeitscheiben, wenn die anomalen Knoten (102, 103, 107) anomales Verhalten zeigen, unter Verwendung der ersten Etiketten und des zweiten Datensatzes identifiziert (209), um Beziehungen zwischen den anomalen Knoten (102, 103, 107) und anderen Knoten (104-106) des Netzwerks zu bestimmen.

15. Computerprogrammprodukt (605), das ein computerlesbares Speichermedium (606) umfasst, auf dem ein Computerprogramm (604) nach Anspruch 14 gespeichert ist.

## Revendications

1. Procédé de surveillance d'un état de synchronisation parmi une pluralité de noeuds (102-107) fonctionnant dans un réseau de communications, le procédé comprenant :
- l'obtention (201) d'informations associées à une pluralité de noeuds (102-107), les noeuds (102-107) présentant des horloges synchronisées, dans lequel des informations relatives à un noeud (102-107) indiquent une ou plusieurs valeurs de paramètres ;
- la création (203) d'un premier ensemble de données sur la base des informations obtenues associées à la pluralité de noeuds (102-107), le premier ensemble de données comprenant des échantillons alignés dans le temps des un ou plusieurs paramètres pour un intervalle de temps ;
- la création (205) d'un second ensemble de données sous la forme d'une pluralité de tranches de temps comprenant les échantillons provenant du premier ensemble de données et des statistiques déterminées sur la base des échantillons provenant du premier ensemble de données calculé pour l'intervalle de temps ;
- l'exécution (207) d'un premier modèle d'apprentissage automatique, ML, permettant une détection d'anomalies sur le premier ensemble de données, le premier modèle MLgénérant des premières étiquettes identifiant des noeuds anormaux (102, 103, 107) ;
- l'identification (209) des noeuds anormaux (102, 103, 107) et des tranches de temps pendant lesquelles les noeuds anormaux (102, 103, 107) présentent un comportement anormal en utilisant les premières étiquettes et le second ensemble de données pour déterminer des relations entre les noeuds anormaux (102, 103, 107) et d'autres noeuds (104-106) du réseau.

2. Procédé selon la revendication 1, comprenant en outre :
- l'exécution (211) d'un modèle explicatif sur le premier modèle ML et le premier ensemble de données, dans lequel une sortie du modèle explicatif est une pluralité de vecteurs d'importance de caractéristiques pour l'intervalle de temps ;
- l'obtention (213) d'une pluralité de secondes étiquettes associées aux vecteurs d'importance de caractéristiques pour l'intervalle de temps, dans lequel une seconde étiquette indique un type d'anomalie ;
- l'exécution (215) d'un deuxième modèle ML en prenant pour entrée la pluralité des vecteurs d'importance de caractéristiques ;
- l'identification (217) du type d'anomalie des noeuds anormaux (102, 103, 107).

3. Procédé selon la revendication 1, comprenant en outre :
- l'exécution (219) d'un troisième modèle ML sur le premier ensemble de données et une pluralité de premières étiquettes associées ;
- l'exécution (221) d'un modèle explicatif sur le troisième modèle ML et le premier ensemble de données, dans lequel une sortie du modèle explicatif est une pluralité de vecteurs d'importance de caractéristiques pour l'intervalle de temps ;
- l'obtention (213) d'une pluralité de secondes étiquettes associées aux vecteurs d'importance de caractéristiques pour l'intervalle de temps, dans lequel une seconde étiquette indique un type d'anomalie ;
- l'exécution (215) d'un deuxième modèle ML en prenant pour entrée la pluralité des vecteurs d'importance de caractéristiques ;
- l'identification (217) du type d'anomalie des noeuds anormaux (102, 103, 107).

4. Dispositif (101) de surveillance d'un état de synchronisation parmi une pluralité de noeuds (102-107) fonctionnant dans un réseau de communications, le dispositif (101) comprenant un processeur (601) et une mémoire (602), la mémoire (602) présentant des instructions exécutables par le processeur (601), dans lequel, lorsqu'elles sont exécutées par le processeur (601), les instructions amènent le dispositif (101) à :
- obtenir (201) des informations associées à une pluralité de noeuds (102-107), les noeuds (102-107) présentant des horloges synchronisées, dans lequel des informations relatives à un noeud (102-107) indiquent une ou plusieurs valeurs de paramètres ;
- créer (203) un premier ensemble de données sur la base des informations obtenues associées à la pluralité de noeuds (102-107), le premier ensemble de données comprenant des échantillons alignés dans le temps des un ou plusieurs paramètres pour un intervalle de temps ;
- créer (205) un second ensemble de données sous la forme d'une pluralité de tranches de temps comprenant les échantillons provenant du premier ensemble de données et des statistiques déterminées sur la base des échantillons provenant du premier ensemble de données calculé pour l'intervalle de temps ;
- exécuter (207) un premier modèle d'apprentissage automatique, ML, permettant une détection d'anomalies sur le premier ensemble de données, le premier modèle MLgénérant des premières étiquettes identifiant des noeuds anormaux (102, 103, 107) ;
- identifier (209) des noeuds anormaux (102, 103, 107) et des tranches de temps pendant lesquelles les noeuds anormaux (102, 103, 107) présentent un comportement anormal en utilisant les premières étiquettes et le second ensemble de données pour déterminer des relations entre les noeuds anormaux (102, 103, 107) et d'autres noeuds (104-106) du réseau.

5. Dispositif (101) selon la revendication 4, dans lequel, lorsqu'elles sont exécutées par le processeur (601), les instructions amènent le dispositif (101) à
- exécuter (211) un modèle explicatif sur le premier modèle ML et le premier ensemble de données, dans lequel une sortie du modèle explicatif est une pluralité de vecteurs d'importance de caractéristiques pour l'intervalle de temps ;
- obtenir (213) une pluralité de secondes étiquettes associées aux vecteurs d'importance de caractéristiques pour l'intervalle de temps, dans lequel une seconde étiquette indique un type d'anomalie ;
- exécuter (215) un deuxième modèle ML en prenant pour entrée la pluralité des vecteurs d'importance de caractéristiques ;
- identifier (217) le type d'anomalie des noeuds anormaux (102, 103, 107).

6. Dispositif (101) selon la revendication 4, dans lequel, lorsqu'elles sont exécutées par le processeur (601), les instructions amènent le dispositif (101) à
- exécuter (219) un troisième modèle ML sur le premier ensemble de données et une pluralité de premières étiquettes associées ;
- exécuter (221) un modèle explicatif sur le troisième modèle ML et le premier ensemble de données, dans lequel une sortie du modèle explicatif est une pluralité de vecteurs d'importance de caractéristiques pour l'intervalle de temps ;
- obtenir (213) une pluralité de secondes étiquettes avec les vecteurs d'importance de caractéristiques pour l'intervalle de temps, dans lequel une seconde étiquette indique un type d'anomalie ;
- exécuter (215) un deuxième modèle ML en prenant pour entrée la pluralité des vecteurs d'importance de caractéristiques ;
- identifier (217) le type d'anomalie des noeuds anormaux (102, 103, 107).

7. Dispositif (101) selon l'une quelconque des revendications 4 à 6, dans lequel, lorsqu'elles sont exécutées par le processeur (601), les instructions amènent le dispositif (101) à
- obtenir (223) un score à titre de sortie du premier modèle ML pour l'intervalle de temps, dans lequel le score indique un degré du comportement d'anomalie.

8. Dispositif selon l'une quelconque des revendications 4 à 7, dans lequel les informations associées à une pluralité de noeuds (102-107) sont obtenues de manière asynchrone.

9. Dispositif (101) selon l'une quelconque des revendications 4 à 8, dans lequel, lorsqu'elles sont exécutées par le processeur (601), les instructions amènent le dispositif (101) à créer (203) le premier ensemble de données en associant une ou plusieurs des valeurs de paramètres obtenues avec un noeud (102-107) pour une tranche de temps.

10. Dispositif (101) selon l'une quelconque des revendications 4 à 9, dans lequel le premier ensemble de données comprend des statistiques obtenues à partir d'un noeud (102-107).

11. Dispositif (101) selon l'une quelconque des revendications 4 à 10, dans lequel, lorsqu'elles sont exécutées par le processeur (601), les instructions amènent le dispositif (101) à créer (205) le second ensemble de données en alignant dans le temps les valeurs de paramètres obtenues associées à un noeud (102-107) pour une tranche de temps.

12. Dispositif (101) selon l'une quelconque des revendications 4 à 11, dans lequel, lorsqu'elles sont exécutées par le processeur (601), les instructions amènent le dispositif (101) à créer (203) le second ensemble de données en évaluant une ou plusieurs métriques de performances associées à un noeud (102-107) pour une tranche de temps, dans lequel l'évaluation est effectuée sur la base des valeurs de paramètres obtenues.

13. Dispositif (101) selon l'une quelconque des revendications 4 à 12, dans lequel le second ensemble de données comprend des informations définissant une topologie de synchronisation temporelle et/ou fréquentielle du réseau.

14. Programme informatique (604) comprenant des instructions qui, lorsqu'elles sont exécutées dans une unité de traitement sur un dispositif (101), amènent le dispositif (101) à :
- obtenir (201) des informations associées à une pluralité de noeuds (102-107), les noeuds (102-107) présentant des horloges synchronisées, dans lequel des informations relatives à un noeud (102-107) indiquent une ou plusieurs valeurs de paramètres ;
- créer (203) un premier ensemble de données sur la base des informations obtenues associées à la pluralité de noeuds (102-107), le premier ensemble de données comprenant des échantillons alignés dans le temps des un ou plusieurs paramètres pour un intervalle de temps ;
- créer (205) un second ensemble de données sous la forme d'une pluralité de tranches de temps comprenant les échantillons provenant du premier ensemble de données et des statistiques déterminées sur la base des échantillons provenant du premier ensemble de données calculé pour l'intervalle de temps ;
- exécuter (207) un premier modèle d'apprentissage automatique, ML, permettant une détection d'anomalies sur le premier ensemble de données, le premier modèle MLgénérant des premières étiquettes identifiant des noeuds anormaux (102, 103, 107) ;
- identifier (209) des noeuds anormaux (102, 103, 107) et des tranches de temps pendant lesquelles les noeuds anormaux (102, 103, 107) présentent un comportement anormal en utilisant les premières étiquettes et le second ensemble de données pour déterminer des relations entre les noeuds anormaux (102, 103, 107) et d'autres noeuds (104-106) du réseau.

15. Produit programme d'ordinateur (605) comprenant un support d'enregistrement lisible par ordinateur (606) sur lequel est enregistré un programme informatique (604) selon la revendication 14.
